# EUROPEAN PATENT APPLICATION

(11) **EP 1 933 301 A2**
(43) Date of publication of application: **18.06.2008**
(21) Application number: 07150007.8
(22) Date of filing: 13.12.2007
(51) Int. Cl.: G10L 15/06, G10L 15/18, G10L 15/22

(54) **Speech recognition method and system with intelligent speaker identification and adaptation**

(30) Priority: 13.12.2006 TW 95146777
(71) Applicant: Delta Electronics, Inc., Taoyuan Sien 333, Taiwan (CN)
(72) Inventor: Wang, Jui-Chang, 333, Tayouan Hsien (TW)
(74) Representative: Barth, Stephan Manuel

(57) **Abstract**

A speech recognition method is provided. The speech recognition method includes the steps of (a) receiving a speech from a user; (b) recognizing the speech to generate a recognition result with a score; and (c) according to the score of the recognition result, performing one of the following steps, (c1) preventing from performing an adaptation for an acoustic model but using a utility rate of the speech to learn a new language and grammar probability model when the score is relatively high, (c2) performing a confirmation by the user when the score is relatively low, further comprising: (c21) when the recognition result is confirmed in the confirmation by the user, performing the adaptation in the acoustic model to increase an occurrence probability of the speech and using the utility rate of the speech to learn the new language and grammar probability model, (c22) when the recognition result is rejected in the confirmation by the user, performing the adaptation in the acoustic model to decrease the occurrence probability of the speech.

## Description

The present invention relates to a speech recognition method and system, and more particularly to a speech recognition method and system with intelligent speaker identification and adaptation.

The biggest problem of the speech recognition systems using voice commands is that the recognition is not correct for one hundred percent. The errors of the recognitions would increase great inconvenience, and even sometimes would cause risks of the smooth operation of the system.

So far, most speech recognition systems using voice commands do not consider to aggressively reduce speech recognition errors in the beginning, so the systems are designed to feel nothing about successive errors and there are no corresponding solutions to reduce the successive errors. Therefore, users of the speech recognition systems using voice commands usually feel upset over the errors, which repeatedly occur without any solutions, and the perplexities of the complicated usage. At last the users may feel upset and reject the systems.

Even sometimes, some recognition errors of some voice commands would cause risks of the smooth operation of the systems. As to this respect, prior speech recognition systems using voice commands just simply perform a further confirmation on all or part of the recognition commands. The design would increase the inconvenience of using the speech recognition system. Therefore, increasing the accuracy of partial or whole recognition of voice commands by a positive and intelligent learning mechanism is preferable.

Hence, because of the defects in the prior art, the inventors provide a speech recognition method and system with a mechanism that automatically identify the speaker and learn the speech characteristics of the speaker to improve the recognition performance, via the intelligent speaker identification and adaptation to effectively overcome the above defects in the prior art.

In accordance with an aspect of the present invention, a speech recognition method is provided. The speech recognition method comprises (a) receiving a speech from a user; (b) recognizing the speech to generate a recognition result with a score; and (c) according to the score of the recognition result, performing one of the following steps, (c1) preventing from performing an adaptation for an acoustic model but using a utility rate of the speech to learn a new language and grammar probability model when the score is relatively high, (c2) performing a confirmation by the user when the score is relatively low, further comprising: (c21) when the recognition result is confirmed in the confirmation by the user, performing the adaptation in the acoustic model to increase an occurrence probability of the speech and using the utility rate of the speech to learn the new language and grammar probability model, (c22) when the recognition result is rejected in the confirmation by the user, performing the adaptation in the acoustic model to decrease the occurrence probability of the speech.

Preferably, the speech is an oral command.

In accordance with another aspect of the present invention, a speech recognition method for recognizing a respective speech of a plurality of users is provided. The speech recognition method is used in a speech recognition system having a plurality of speech recognition subsystems respectively, and comprises (a) receiving the speech from a specific user; (b) recognizing the speech to generate a recognition result with a score; (c) when the score is relatively high, switching automatically from a first one of the speech recognition subsystems to a specific one of the speech recognition subsystems for the specific user; (d) when the score is relatively low and in a normal condition, recognizing the speech of the specific user continuously until an enough confidence is accumulated for being switched to the subsystem for the specific user; and (e) when the score is relatively low and in a special condition, asking the specific user directly for immediately switching to the subsystem for the specific user.

Preferably, each of the users has his own subsystem for recording respective related success and error records for a respective oral command of each of the users and for training and adapting a respective acoustic model and language probability for each of the users.

Preferably, the speech is an oral command.

Preferably, the special condition is that a successive error is occurring for recognizing the oral command.

Preferably, the special condition is that a private data of the specific user is processed.

In accordance with a further aspect of the present invention, a speech processing method is provided. The speech processing method comprises (a) receiving a speech from a user; (b) recognizing the speech to generate a recognition result; (c) when errors are successively occurred in the recognition result, detecting the recognition result for getting an error pattern; and (d) performing an adaptation according to the error pattern.

Preferably, the speech is an oral command.

Preferably, the error pattern comprises (a) a first pattern where a successive oral command is recognized identically and rejected repeatedly; (b) a second pattern where a successive oral command is recognized differently but rejected repeatedly; (c) a third pattern where a successive voice input is recognized as meaningful speech commands but rejected, the voice input has low energy and is a non-oral voice input with background noises; and (d) a fourth pattern where the errors are successively odd input errors.

Preferably, the adaptation comprises an inhibition of an error option repeatedly occurring in order to proceed a temporary adaptation of a language and grammar probability model for the user.

Preferably, the adaptation comprises additionally establishing a temporary database for inhibitive commands for decreasing an occurrence probability of an error option successively rejected by the user.

In accordance with a further aspect of the present invention, a speech recognition/processing system is provided. The speech recognition/processing system comprises a speech recognition unit for receiving and recognizing the speech from a user to generate a recognition result; an error detecting unit connected with the speech recognition unit for detecting the recognition result to get an error pattern thereof when successive errors for the recognition result continuously occur; and an error inhibiting unit connected with the error detecting unit for performing an adaptation according to the error pattern.

Preferably, the speech is an oral command.

Preferably, the error pattern comprises (a) a first pattern
where a successive oral command is recognized identically and rejected repeatedly; (b) a second pattern where a successive oral command is recognized differently but rejected repeatedly; (c) a third pattern where a successive voice input is recognized as meaningful speech commands but rejected, the voice input has low energy and is a non-oral voice input with background noises; and (d) a fourth pattern where the errors are successively odd input errors.

Preferably, the adaptation comprises an inhibition of an error option repeatedly occurring in order to proceed a temporary adaptation of a language and grammar probability model for the user.

Preferably, the adaptation comprises additionally establishing a temporary database for inhibitive commands for decreasing an occurrence probability of an error option successively rejected by the user.

The above objects and advantages of the present invention will become more readily apparent to those ordinarily skilled in the art after reviewing the following detailed descriptions and accompanying drawings, in which:

Fig. 1 is a flow chart showing the switching process of the users in the present invention;

Fig. 2 is a block diagram showing the speech recognition/processing system in the present invention; and

Fig. 3 is a flow chart showing the identification process of successively recognized errors in the present invention.

The learning mechanism designed in the present invention is on the premise of the frame of the following speech recognition system. The oral recognition operating steps of the speech recognition system include inputting a speech, recognizing the speech, identifying the recognition result automatically, responding to the recognition result by sound or image, and identifying the recognition result by hand or other oral input for correction. Each recognition result of each oral input has a score. Oral commands with high scores could be executed without hand identification, but those with low scores need hand identification to assist in execution. The system will inform the user of a further oral or hand identification step in the form of sound or image as response, for example, confirmation or rejection could be identified via the keystroke, or could be answered via oral commands. If the user confirms the oral command, then the process of the oral commands is completed. However, if the user rejects the oral command, then the process of repeated input or error correction has to be performed until the recognition result is correct.

The system of learning mechanism designed in the present invention includes an automatic speaker recognition technology. The speaker recognition system includes a learning stage for new users and a normal using stage for known users.

In the learning stage for new users, the acoustic models of new users need to be built up. Before enough acoustic data of a new user who needs a specific user profile is accumulated, the Graphics User Interface (GUI) or keyboard input could be served as the operating interface for selecting speakers. Next, the acoustic data of the speaker is recorded when the oral speech recognition is performed. The user could start to use the system without selecting his own name or number by the GUI or keyboard input after enough acoustic comparison data of the speaker are accumulated.

In the normal using stage for known users, the speaker recognition system should be able to recognize speakers automatically for convenient operation. Therefore, via the speaker recognition system, the system not only could recognize the speakers automatically, but also could switch user environments automatically for providing more convenient information service.

How the intelligent learning mechanism works is illustrated below according to the foregoing system and operating information. In brief, in respect of the speech acoustic model and the language and grammar probability model, the following two adaptations are performed respectively: the adaptation of the basic entirety and the temporary adaptation for successive errors.

[The adaptation of the basic entirety]

Oral commands could be classified to three sorts, including the automatic pass with a high score, the confirmed pass with a low score and the rejected pass with a low score.

In respect of oral commands with relatively high scores, the adaptation for the acoustic model is not performed in the present invention, but a utility rate of the oral command is used to learn a new language and grammar probability model.

In respect of oral commands with relatively low scores, a confirmation by the user is performed. When the oral command is confirmed in the confirmation by the user, the present invention will perform an adaptation in an acoustic model to increase the occurrence probability of the speech and use the utility rate of the speech to learn a new language and grammar probability model.

When the oral command with a relatively low score is rejected in the confirmation by the user, the present invention will perform an adaptation in an acoustic model to decrease the occurrence probability of the speech without using the utility rate of the speech to learn a new language and grammar probability model.

The adaptation of the basic entirety is helpful to learn special errors of users and to establish the specific acoustic and language models of the users.

[The adaptation of the basic entirety under the switching model of a plurality of users]

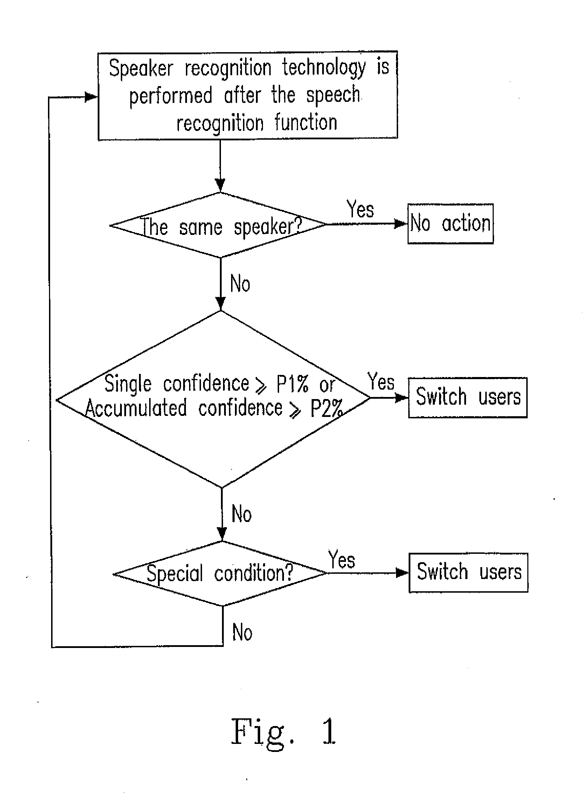

The above adaptation of the basic entirety can automatically learn a plurality of speech recognition subsystems of a plurality of users according to the speaker recognition technology, and use the subsystems in the speech recognition system for a plurality of users. Each of the users recorded in the system has his own subsystem for recording respective related success and error records for respective oral commands of each user and for training and adapting a respective acoustic model and language probability for each of the users. Please refer to Fig. 1, which is a flow chart showing the switching process of the users in the present invention. The mechanism of switching users is performed as follows.

(1) The speaker recognition technology is performed after the speech recognition function. When the same speaker is recognized, then the speech recognition subsystem in the speech recognition system is not switched.

(2) When different speaker is recognized, as to the recognition result with a relatively high score, the system will automatically switch the recognition subsystem to that of the specific speaker. The action of the automatic switch will be displayed in the corner of the screen of the operated machine.

(3) When the score of the recognition result is relatively low and in a normal condition, the latest oral command is retained and used to perform the confirmation of the speaker recognition until enough confidence is accumulated, and then the switch of the subsystems is performed.

(4) When the score of the recognition result is relatively low and in a special condition, the speech recognition system will ask the specific user directly for immediately switching to the subsystem for the specific user. For example, when successive errors occur in an oral command, the switch of the subsystems will be performed and the quality of the recognition will be improved immediately. For another example, when private data of a specific user are processed, the speech recognition system will ask the specific user directly for processing the private data in a correct subsystem for the specific user.

[The temporary adaptation for successive errors]

As to the occurrence of successive errors, a principle of inhibiting the repeated occurrence of errors is designed in the present invention. A temporary adaptation is performed for effectively inhibiting the successive occurrence of the errors and maintaining the convenience of the oral operating interface. The definition of the successive errors is when the operated machine is under the same condition, errors occur successively in a speech recognition result of an oral command and thus the command is not executed. The so called "the operated machine is under the same condition" means that the operated range of the oral command is not changed, including that the channel of a TV is not changed, the volum is not changed, the brightness is not changed and so on. If "the machine is under the same condition" is conformed therewith, the occurrence of the successive errors of the oral commands can be assumed that it is because of inputting the same oral command. Therefore, the occurence of the same error can be detected and inhibited thereby.

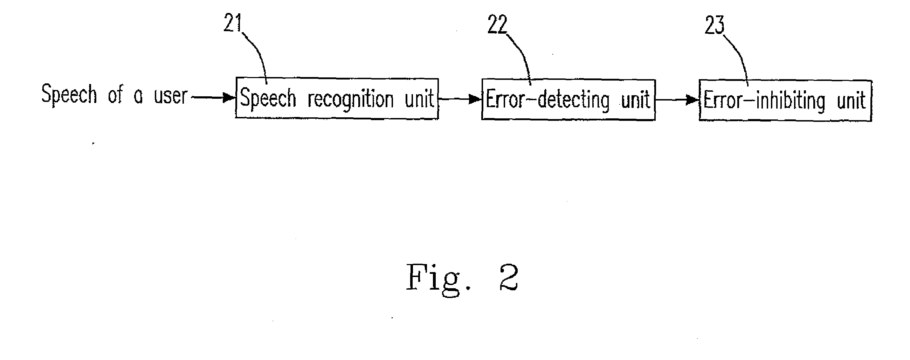

Please refer to Fig. 2, which is a block diagram showing the speech recognition/processing system in the present invention. The system includes a speech recognition unit 21, an error-detecting unit 22 and an error-inhibiting unit 23. The temporary adaptation for successive errors in the present invention detects error patterns via the error-detecting unit 22 and performs different error inhibitions for different error patterns via the error-inhibiting unit 23. The successive errors detected by the error-detecting unit 22 can be classified into the following patterns A-D.

Pattern A: the errors are the successive oral commands recognized identically and rejected repeatedly.

Pattern B: the errors are the successive oral commands recognized differently but rejected repeatedly.

Pattern C: the errors are the successive voice inputrecognized as meaningful speech commands but rejected. The voice input has low energy and may be a non-oral voice input with background noises.

Pattern D: the errors are successively odd input errors.

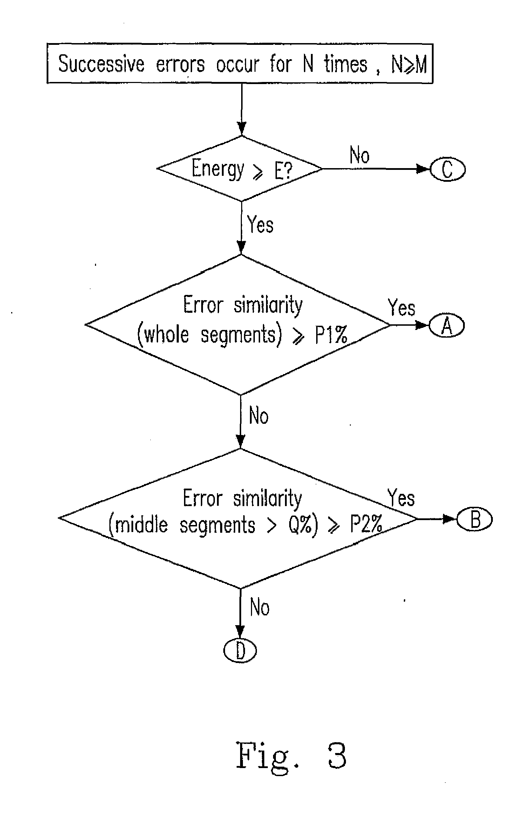

Please refer to Fig. 3, which is a flow chart showing the identification process of successively recognized errors in the present invention. As shown in Fig. 3, when successive errors occur for N times, the system will detect whether the speech energy is larger than or equal to a default value E; if not, then the speech is determined as pattern C. When the speech energy is larger than the default value E, the system will detect whether the error similarity of the speech (whole segments) is larger than or equal to a default value P1%; if yes, then the speech is determined as pattern A. If the error similarity of the whole segments of the speech is smaller than the default value P1%, then the system will detect whether the error similarity of the middle segments (without indicated percentage of head and tail segments) of the speech is larger than or equal to a default value P2%; if yes, then the speech is determined as pattern B. The speech in the remaining situations is determined as pattern D.

The error-inhibiting unit 23 in the present invention performs respective adaptation according to the detected error patterns. The adaptation mainly comprises an inhibition of an error option repeatedly occurring for a temporary adaptation of a language and grammar probability model, or additionally establishing a temporary database for inhibitive commands for decreasing an occurrence probability of an error option successively rejected by a user. After the machine state is changed, which would be regarded as a new state, the temporary adaptation would be relieved and the system would return to the original using state, and the successive number of times of the occurence of the errors would be recounted as well.

The temporary adaptation of a language and grammar probability could be a decrease of the probability to a certain percentage, even to zero percent. The system could directly adapt the ongoing language and grammar probability model; however, the normal model should be additionally stored, so that after the temporary adaptation is relieved, the system could return to the normal model therefor. Alternatively, a language and grammar inhibiting probability model could be additionally stored, so that the result of subtracting the inhibiting model from the normal model will be adopted when the ongoing language and grammar probability is calculated.

Based on the above, the present invention provides a speech recognition method with intelligent speaker identification and adaptation. The method is deeply concerned about the feeling of users and thus advances the recognition accuracy of the system without increasing inconvenience of the users. Furthermore, the use of the speech recognition technology can enlarge the above learning mechanism to become an operating surface for a plurality of users. Therefore, the present invention can effectively improve the defects of prior arts, and thus it fits the demand of the industry and is industrially valuable.

## Claims

1. A speech recognition method, comprising the steps of :
(a) receiving a speech from a user;
(b) recognizing the speech to generate a recognition result with a score; and
(c) according to the score of the recognition result, performing one of the following steps,
(c1) preventing from performing an adaptation for an acoustic model but using a utility rate of the speech to learn a new language and grammar probability model when the score is relatively high,
(c2) performing a confirmation by the user when the score is relatively low, further comprising:
(c21) when the recognition result is confirmed in the confirmation by the user, performing the adaptation in the acoustic model to increase an occurrence probability of the speech and using the utility rate of the speech to learn the new language and grammar probability model,
(c22) when the recognition result is rejected in the confirmation by the user, performing the adaptation in the acoustic model to decrease the occurrence probability of the speech,

2. A speech recognition method for recognizing a respective speech of a plurality of users, in a speech recognition system having a plurality of speech recognition subsystems respectively, comprising:
(a) receiving the speech from a specific user;
(b) recognizing the speech to generate a recognition result with a score;
(c) when the score is relatively high, switching automatically from a first one of the speech recognition subsystems to a specific one of the speech recognition subsystems for the specific user;
(d) when the score is relatively low and in a normal condition, recognizing the speech of the specific user continuously until an enough confidence is accumulated for being switched to the system for the specific user; and
(e) when the score is relatively low and in a special condition, asking the specific user directly for immediately switching to the system for the specific user.

3. A method as claimed in Claim 2 **characterized in that** each of the users has his own system for recording respective related success and error records for a respective oral command of each of the users and for training and adapting a respective acoustic model and language probability for each of the users.

4. A method as claimed in Claim 2 **characterized in that** the speech is an oral command and the special condition is that a successive error is occurring for recognizing the oral command.

5. A method as claimed in Claim 2 **characterized in that** the special condition is that a private data of the specific user is processed.

6. A speech processing method, comprising:
(a) receiving a speech from a user;
(b) recognizing the speech to generate a recognition result;
(c) when errors are successively occurred in the recognition result, detecting the recognition result for getting an error pattern therefore; and
(d)performing an adaptation according to the error pattern.

7. A method as claimed in Claim 6 **characterized in that** the error pattern comprises:
(a) a first pattern where a successive oral command is recognized identically and rejected repeatedly;
(b) a second pattern where a successive oral command is recognized differently but rejected repeatedly;
(c) a third pattern where a successive voice input is recognized as meaningful speech commands but rejected, the voice input is a non-oral voice input with background noises; and
(d) a fourth pattern where the errors are successively odd input errors.

8. A method as claimed in Claim 6 **characterized in that** the adaptation comprises an inhibition of an error option repeatedly occurring in order to proceed a temporary adaptation of a language and grammar probability model for the user.

9. A method as claimed in Claim 6 **characterized in that** the adaptation comprises additionally establishing a temporary database for inhibitive commands for decreasing an occurrence probability of an error option successively rejected by the user.

10. A speech recognition/processing system, the system comprising:
a speech recognition unit (21) for receiving and recognizing the speech from a user to generate a recognition result;
an error detecting unit (22) connected with the speech recognition unit for detecting the recognition result to get an error pattern thereof when successive errors for the recognition result continuously occur; and
an error inhibiting unit (23) connected with the error detecting unit for performing an adaptation according to the error pattern.
